# EUROPEAN PATENT SPECIFICATION

(11) **EP 3 764 673 B1**
(45) Date of publication and mention of the grant of the patent: **18.11.2026**
(21) Application number: 18914347.2
(22) Date of filing: 11.12.2018
(51) Int. Cl.: H04W 4/70, F24F 11/56

(54) **AIR CONDITIONER UNIT WIRELESS NETWORKING METHOD, APPARATUS AND SYSTEM**
VERFAHREN, VORRICHTUNG UND SYSTEM ZUR DRAHTLOSEN VERNETZUNG EINER KLIMAANLAGE
PROCÉDÉ, APPAREIL ET SYSTÈME DE MISE EN RÉSEAU SANS FIL DE CONDITIONNEUR D'AIR

(30) Priority: 13.04.2018 CN 201810333785
(43) Date of publication of application: 13.01.2021
(73) Proprietor: Gree Electric Appliances, Inc. of Zhuhai, Zhuhai, Guangdong 519070 (CN)
(72) Inventor: XIONG, Jianguo, Zhuhai, Guangdong 519070 (CN); ZHANG, Guangxu, Zhuhai, Guangdong 519070 (CN); TANG, Jie, Zhuhai, Guangdong 519070 (CN); YU, Weiyou, Zhuhai, Guangdong 519070 (CN); YE, Tieying, Zhuhai, Guangdong 519070 (CN); LAI, Dongfeng, Zhuhai, Guangdong 519070 (CN); WANG, Wencan, Zhuhai, Guangdong 519070 (CN)
(74) Representative: Reddie & Grose LLP
(86) International application number: PCT/CN2018/120375
(87) International publication number: WO 2019/196456

(56) References cited:
- WO-A1-2017/081304
- CN-A- 103 298 146
- CN-A- 104 613 588
- CN-A- 104 613 590
- CN-A- 104 613 590
- CN-A- 104 764 139
- CN-A- 105 091 198
- CN-A- 105 163 301
- CN-A- 105 526 647
- CN-A- 107 504 642
- CN-A- 108 616 846
- US-A1- 2006 215 650

## Description

### TECHNICAL FIELD

The present invention relates to the field of communication, and in particular to a method, device and system for wireless networking of air conditioning units.

### BACKGROUND

An air conditioning unit is an apparatus that utilizes a refrigerant and works through a compressor to generate cold water by heat exchange to be provided to a terminal air conditioning case for use. In actual use, it is often the case that different air conditioning units need to be connected by networking under different use conditions. Networking is generally classified into wired connection and wireless connection. Networking through wired connection is reliable in operation, but it is often difficult to construct due to the limitation of space. Networking through wireless connection is not limited by space, the connection is fast, and the connection range is wide, but there is a problem of low connection accuracy since it is susceptible to interference during actual use.

With the development of wireless technology, more and more air conditioning units adopt wireless communication. At the engineering installation and debugging site, there are problems, such as, it is susceptible to interference and is unstable since there are many wireless signals, and wireless signals would also be subjected to space limitation, etc., which would result in that wireless networking of air conditioners is extremely inconvenient, the networking efficiency is low and it is prone to error, thus bringing great difficulties to engineering debugging and after-sales maintenance.

No effective solution to the above-mentioned problems has been proposed yet.

Chinese patent application with publication number CN104613590 discloses an air-conditioning wireless networking method. The method comprises the steps that: obtaining coded messages of wireless modules of air-conditioning indoor units which belong to an air-conditioning unit through a manipulator; storing the coded messages in an air-conditioning outer unit of the air-conditioning unit through the manipulator; controlling the air-conditioning indoor units to send networking requests; controlling the air-conditioning outer unit to carry out networking request monitoring, if the networking requests are received, judging whether the coded messages of the air-conditioning indoor units which send the networking requests are in accordance with the coded messages which are stored by the air-conditioning outer unit, if the coded messages of the air-conditioning indoor units which send the networking requests are in accordance with the coded messages which are stored by the air-conditioning outer unit, carrying out a networking confirmation on the air-conditioning indoor units which send the networking requests until the networking confirmation on the air-conditioning indoor units which belong to the air-conditioning unit is completed.

Chinese patent application with publication number CN105163301 discloses a pairing method of terminal devices, and the method is applied to a server and comprises the steps of: collecting specific operation information of each terminal device; according to the specific operation information of each terminal device, carrying out matching on the terminal devices; and sending connection information of two mutually-matched terminal devices respectively to each other.

### SUMMARY

The invention is defined by the independent claims to which reference should now be made. Optional features are set forth in the dependent claims.

Embodiments of the present invention provide a method, device and system for wireless networking of air conditioning units, to at least solve the technical problem of low networking accuracy caused by wireless which is unstable as it is susceptible to interference.

According to one aspect of the embodiments of the present invention, a method for wireless networking of air conditioning units is provided, comprising: acquiring information of air conditioning units; determining the air conditioning units that need to be networked according to the acquired information, wherein the air conditioning units that need to be networked comprise a first air conditioning unit and a second air conditioning unit; and sending the information of the second air conditioning unit to the first air conditioning unit, and sending the information of the first air conditioning unit to the second air conditioning unit, the information of the second air conditioning unit being used for the first air conditioning unit to be networked with the second air conditioning unit, and the information of the first air conditioning unit being used for the second air conditioning unit to be networked with the first air conditioning unit.

Optionally, acquiring information of air conditioning units comprises: acquiring the information of the air conditioning units by means of scanning two-dimensional codes and/or bar codes of the air conditioning units.

Optionally, determining the air conditioning units that need to be networked according to the acquired information comprises: acquiring a matching rule for matching the air conditioning units that need to be networked; and determining the air conditioning units that need to be networked according to the acquired information and the matching rule.

According to another aspect of the embodiments of the present invention, there is further provided a method for wireless networking of air conditioning units, comprising: receiving a networking request for requesting networking which is sent by a first air conditioning unit, wherein the networking request carries information of the first air conditioning unit; matching the received information of the first air conditioning unit with information of the first air conditioning unit pre-stored by a second air conditioning unit; and controlling the first air conditioning unit to be networked with the second air conditioning unit in the case where the matching is successful.

Optionally, controlling the first air conditioning unit to be networked with the second air conditioning unit comprises: sending a response message for confirming networking to the first air conditioning unit, wherein the response message carries information of the second air conditioning unit, and the information of the second air conditioning unit is used for the first air conditioning unit to verify the second air conditioning unit and confirm the networking with the second air conditioning unit in the case where the verification is successful.

According to another aspect of the embodiments of the present invention, there is further provided a method for wireless networking of air conditioning units, comprising: sending a networking request for requesting networking to a third air conditioning unit; receiving a response message for confirming networking with the fourth air conditioning unit sent by the third air conditioning unit, wherein the response message carries information of the third air conditioning unit; matching the received information of the third air conditioning unit with the information of the third air conditioning unit pre-stored by the fourth air conditioning unit; and controlling the fourth air conditioning unit to be networked with the third air conditioning unit in the case where the matching is successful.

Optionally, receiving a response message for confirming networking with a fourth air conditioning unit sent by the third air conditioning unit comprises: receiving the response message sent by the third air conditioning unit after confirming networking with the fourth air conditioning unit according to the information of the fourth air conditioning unit, in the case where the networking request carries information of the fourth air conditioning unit.

According to one aspect of the embodiments of the present invention, there is further provided a device for wireless networking of air conditioning units, comprising: an acquiring module configured to acquire information of air conditioning units; a determining module configured to determine the air conditioning units that need to be networked according to the acquired information, wherein the air conditioning units that need to be networked comprise a first air conditioning unit and a second air conditioning unit; and a communication module configured to send the information of the second air conditioning unit to the first air conditioning unit and send the information of the first air conditioning unit to the second air conditioning unit, wherein the information of the first air conditioning unit and the information of the second air conditioning unit are used for networking of the first air conditioning unit and the second air conditioning unit.

According to another aspect of the embodiments of the present invention, there is further provided a device for wireless networking of air conditioning units, comprising: a first receiving module configured to receive a networking request for requesting networking which is sent by a first air conditioning unit, wherein the networking request carries information of the first air conditioning unit; a first matching module configured to match the received information of the air conditioning unit with the information of the air conditioning unit pre-stored by a second air conditioning unit; and a first control module configured to control the first air conditioning unit to be networked with the second air conditioning unit in the case where the matching is successful.

According to another aspect of the embodiments of the present invention, there is further provided a device for wireless networking of air conditioning units, comprising: a sending module configured to send a networking request for requesting networking to a third air conditioning unit; a second receiving module configured to receive a response message for confirming networking with the fourth air conditioning unit sent by the third air conditioning unit, wherein the response message carries information of the third air conditioning unit; a second matching module configured to match the received information of the third air conditioning unit with the information of the third air conditioning unit pre-stored by the fourth air conditioning unit; and a second control module configured to control the fourth air conditioning unit to be networked with the third air conditioning unit in the case where the matching is successful.

According to one aspect of the embodiments of the present invention, there is further provided a system for wireless networking of air conditioning units, comprising all the above-mentioned devices for wireless networking of air conditioning units.

In the embodiments of the present invention, after the air conditioning units that need to be networked are determined, networking information of the air conditioning units that are confirmed to be networked is sent, such that the air conditioning units that need to be networked both have stored the information of the other air conditioning unit that needs to be networked, avoiding networking of an air conditioning unit not allowing networking, so that the purpose of accurate networking is achieved, the technical effect of improving the networking accuracy is thus achieved, thereby solving the technical problem of low networking accuracy caused by wireless which is unstable as it is susceptible to interference.

### BRIEF DESCRIPTION OF THE DRAWINGS

The drawings illustrated here are for providing further understanding of the present invention and thus constitute part of the present application. The exemplary embodiments of the present invention and descriptions thereof are for interpreting the present invention, not constituting improper limitations of the present invention. In the drawings:
Fig. 1 is a flowchart of a method for wireless networking of air conditioning units according to an embodiment of the present invention;
Fig. 2 is a flowchart of a preferred method for wireless networking of air conditioning units according to an embodiment of the present invention;
Fig. 3 is a flowchart of another method for wireless networking of air conditioning units according to an embodiment of the present invention;
Fig. 4 is a flowchart of another method for wireless networking of air conditioning units according to an embodiment of the present invention;
Fig. 5 is a schematic diagram of the structure of a device for wireless networking of air conditioning units according to an embodiment of the present invention;
Fig. 6 is a schematic diagram of the structure of another device for wireless networking of air conditioning units according to an embodiment of the present invention;
Fig. 7 is a schematic diagram of the structure of another device for wireless networking of air conditioning units according to an embodiment of the present invention;
Fig. 8 is a schematic diagram of the structure of a system for wireless networking of air conditioning units according to an embodiment of the present invention;
Fig. 9 is a schematic diagram of the structure of a networking system according to a preferred embodiment of the present invention;
Fig. 10 is a schematic diagram of the structure of a networking device according to a preferred embodiment of the present invention;
Fig. 11 is a flowchart of a networking method according to a preferred embodiment of the present invention.

### DETAILED DESCRIPTION

In order to allow a person skilled in the art to better understand the solutions of the present invention, next a clear and complete description of the technical solutions in the embodiments of the present invention will be made in combination with the drawings in the embodiments of the present invention. Obviously, the embodiments described are only a part of rather than all of the embodiments of the present invention. All other embodiments falling within the scope of the claims shall fall within the protection scope of the present invention.

It should be noted that, the terms "first", "second" and the like in the description and in the claims are used for distinguishing between similar objects and not necessarily for describing a particular sequential or chronological order. It is to be understood that the terms so used are interchangeable under appropriate circumstances, so that the embodiments of the present invention described herein can be implemented in other sequences than those illustrated or described herein. In addition, the terms "comprise", "comprise" and "have" and any variations thereof are intended to cover a non-exclusive inclusion, such as, processes, methods, systems, products, or devices that comprise a series of steps or units are not necessarily limited to those steps or units expressly listed, but may comprise other steps or units not expressly listed or inherent to these processes, methods, products or devices.

According to embodiments of the present invention, embodiments of a method for wireless networking of air conditioning units are provided. It should be noted that, the steps shown in the flowcharts in the attached drawings may be executed in a computer system as a set of computer executable instructions, and while a logical order is shown in the flowcharts, the steps shown or described can, in some circumstances, be executed in a different order than the one presented herein.

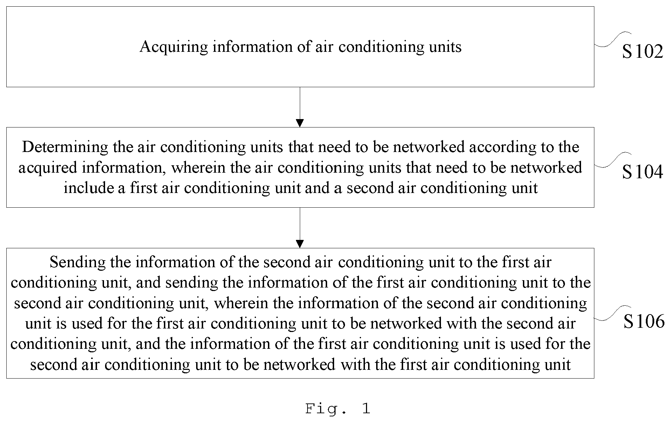

Fig. 1 is a flowchart of a method for wireless networking of air conditioning units according to an embodiment of the present invention. As shown in Fig. 1, the method comprises Step S102 to

### Step S106.

In Step S102, information of air conditioning units is acquired.

In Step S104, the air conditioning units that need to be networked are determined according to the acquired information, wherein the air conditioning units that need to be networked comprise a first air conditioning unit and a second air conditioning unit;

In Step S106, the information of the second air conditioning unit is sent to the first air conditioning unit, and the information of the first air conditioning unit is sent to the second air conditioning unit, wherein the information of the second air conditioning unit is used for the first air conditioning unit to be networked with the second air conditioning unit, and the information of the first air conditioning unit is used for the second air conditioning unit to be networked with the first air conditioning unit.

Through the above-mentioned steps, after the air conditioning units that need to be networked are determined, networking information of the air conditioning units for confirming the networking is sent, the air conditioning units that need to be networked both have stored the information of the other air conditioning unit that needs to be networked, avoiding networking of an air conditioning unit not allowing networking, so that the purpose of accurate networking is achieved, the technical effect of improving the networking accuracy is thus achieved, thereby solving the technical problem of low networking accuracy caused by wireless which is unstable as it is susceptible to interference.

Wherein when the first air conditioning unit and the second air conditioning unit are networked, the networking may be realized in many ways, for example, in the following way: the first air conditioning unit firstly sends a networking request to the second air conditioning unit, wherein the networking request carries information of the first air conditioning unit; after receiving the networking request, the second air conditioning unit compares the received information of the first air conditioning unit with the pre-stored information of the first air conditioning unit, and if they match, sends a networking response (confirming that networking with the first air conditioning unit can be performed), wherein the networking response carries the information of the second air conditioning unit; and after receiving the networking response, the first air conditioning unit compares the received information of the second air conditioning unit with the pre-stored information of the second air conditioning unit, and if they match, confirms the networking, thus the networking of the first air conditioning unit and the second air conditioning unit is completed. The accuracy of both parties of the networking is ensured through double confirmation by the first air conditioning unit and the second air conditioning unit.

It should be noted that, upon acquiring information of the air conditioning units, various methods may be adopted. For example, a coordinate system may be established to obtain position coordinates of the air conditioning units, and the air conditioning units that need to be networked are determined by the position coordinates. However, position coordinates have poor precision in an actual use and a very limited application range, and the process of calculating the position coordinates is complicated.

Preferably, upon acquiring the information of the air conditioning units, the information of the air conditioning units is acquired by means of scanning two-dimensional codes and/or bar codes of the air conditioning units. The two-dimensional code and/or bar code can not only record identification information of the air conditioning unit but also carry various available information. The information carried by the two-dimensional code and/or bar code may be some operation parameters of the air conditioning unit, specification parameters of the air conditioning unit, performance parameters of the air conditioning unit, etc. It should be noted that, the bar code may be a production bar code on an air conditioning unit. Each independent air conditioning unit has an individual production bar code during production, which is scanned directly and is easy and convenient to acquire. Two-dimensional codes are automatically generated by numbering the air conditioning units, the two-dimensional codes are in one-to-one correspondence to the air conditioning units, and the air conditioning units are determined by the two-dimensional codes. The advantage of two-dimensional codes lies in that, numbering before networking can avoid the loss of bar codes due to long service life of the air-conditioning units, which is reliable and accurate, and both two-dimensional codes and bar codes are directly scanned by a code scanner, which are convenient to acquire.

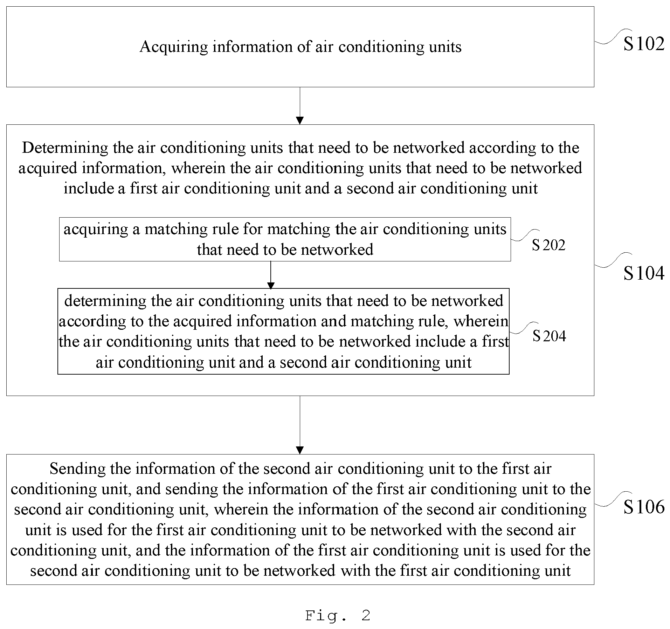

Fig. 2 is a flowchart of a preferred method for wireless networking of air conditioning units according to an embodiment of the present invention. As shown in Fig. 2, in the preferred method for wireless networking of air conditioning units, determining the air conditioning units that need to be networked according to the acquired information comprises the following steps of S202 and S204.

In Step S202, a matching rule for matching the air conditioning units that need to be networked is acquired.

In Step S204, the air conditioning units that need to be networked are determined according to the acquired information and matching rule, wherein the air conditioning units that need to be networked comprise a first air conditioning unit and a second air conditioning unit.

Through the above-mentioned steps, it is possible to realize that, in the method for wireless networking of air conditioning units according to an embodiment of the present invention, by determining the matching rule, the acquired information of air conditioning units is screened to determine the air conditioning units that need to be networked, thus achieving the technical effect of automatic and accurate networking through the automatic matching according to the matching rule. The steps of manual setting and selection are avoided, the labor amount of the operator is reduced, and the working efficiency can also be improved to a certain degree.

It should be noted that, the matching rule can be determined according to actual conditions, such as, determination by pre-numbering, in which the matching relationship is determined according to the serial numbers; or determination according to the principle of proximity, in which matching objects that need to be networked are determined according to the spatial distance between the air conditioning units; or determination according to a random principle, in which a computer directly selects the networkable objects at random.

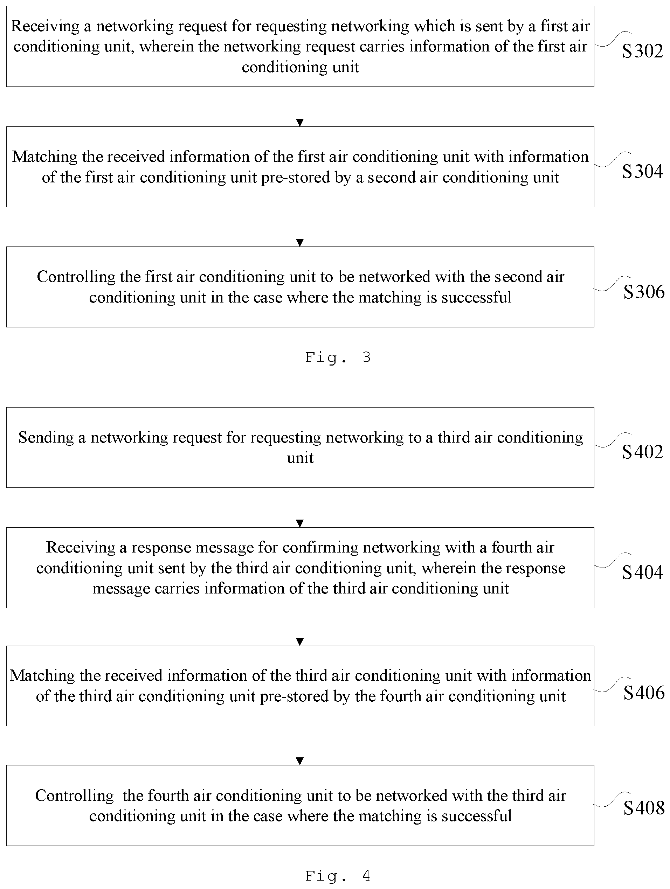

According to the embodiments of the present invention, there is further provided an embodiment of another method for wireless networking of air conditioning units. Fig. 3 is a flowchart of another method for wireless networking of air conditioning units according to an embodiment of the present invention. As shown in Fig. 3, the method comprises the following steps of S302, S304 and S306.

In Step S302, a networking request for requesting networking which is sent by a first air conditioning unit is received, wherein the networking request carries information of the first air conditioning unit.

In Step S304, the received information of the first air conditioning unit is matched with information of the first air conditioning unit pre-stored by a second air conditioning unit.

In Step S306, the first air conditioning unit is controlled to be networked with the second air conditioning unit in the case where the matching is successful.

Through the above-mentioned steps, it is possible to realize that, in the method for wireless networking of air conditioning units according to an embodiment of the present invention, the first air conditioning unit and the second air conditioning unit are controlled to be networked by means of matching the received information with the pre-stored information. Since the information of the air conditioning units that can be networked is pre-stored, networking with an air conditioning unit of which the information is not stored can be effectively avoided, such that the method for wireless networking of air conditioning units according to an embodiment of the present invention achieves the technical effect of accurate networking, and further solves the technical problem of low networking accuracy caused by wireless which is unstable as it is susceptible to interference.

When the first air conditioning unit is networked with the second air conditioning unit, the networking can be performed directly after verification of the second air conditioning unit, that is, the networking is performed in a one-way verification manner. The steps are simple, and the networking is convenient, which can effectively improve the networking efficiency.

It is also possible to send the information of the second air conditioning unit to the first air conditioning unit and perform the networking after the verification by the first air conditioning unit. According to the invention, controlling the first air conditioning unit to be networked with the second air conditioning unit comprises: sending a response message for confirming networking to the first air conditioning unit, wherein the response message carries information of the second air conditioning unit, and the information of the second air conditioning unit is used for the first air conditioning unit to verify the second air conditioning unit and confirm the networking with the second air conditioning unit in the case where the verification is successful. Networking in the aforementioned way of verification by both parties can effectively improve the networking accuracy, compared with the one-way verification manner.

According to the embodiments of the present invention, there is further provided an embodiment of another method for wireless networking of air conditioning units . Fig. 4 is a flowchart of another method for wireless networking of air conditioning units according to an embodiment of the present invention. As shown in Fig. 4, the method comprises the following steps of S402, S404, S406and S408.

In Step S402, a networking request for requesting networking is sent to a third air conditioning unit.

In Step S404, a response message for confirming networking with a fourth air conditioning unit sent by the third air conditioning unit is received, wherein the response message carries information of the third air conditioning unit.

In Step S406, the received information of the third air conditioning unit is matched with the information of the third air conditioning unit pre-stored by the fourth air conditioning unit.

In Step S408, the fourth air conditioning unit is controlled to be networked with the third air conditioning unit in the case where the matching is successful.

Through the above-mentioned steps, the third air conditioning unit and the fourth air conditioning unit are controlled to be networked by means of matching the received information with the pre-stored information. Since the information of the air conditioning units that can be networked is pre-stored, networking with an air conditioning unit of which the information is not stored can be effectively avoided, such that the method for wireless networking of air conditioning units according to an embodiment of the present invention achieves the technical effect of accurate networking, and further solves the technical problem of low networking accuracy caused by wireless which is unstable as it is susceptible to interference.

Wherein controlling the fourth air conditioning unit to be networked with the third air conditioning unit may be performed in the following way: the fourth air conditioning unit sends a networking request to the third air conditioning unit, receives a networking response of the third air conditioning unit and verifies the information of the third air conditioning unit, and the networking is performed if the verification is successful.

It should be noted that, when the fourth air conditioning unit sends a networking request to the third air conditioning unit and the third air conditioning unit receives the networking request of the fourth air conditioning unit, the confirmation of the third air conditioning unit for the networking with the fourth air conditioning unit may or may not be verified. When the networking is performed in an unverified manner, the verification process involved in the whole networking is only that the fourth air conditioning unit verifies the networking of the fourth air conditioning unit and the third air conditioning unit. In order to realize the verification involving both parties of networking in the networking process, preferably, after the third air conditioning unit verifies the information of the fourth air conditioning unit, in the case where the information matches, the third air conditioning unit sends a networking confirmation message to the fourth air conditioning unit. That is, networking verification of the networking of the third air conditioning unit and the fourth air conditioning unit by the third air conditioning unit is added. For example, the third air conditioner unit confirming networking with the fourth air conditioner unit through verification may be realized in the following way, that is, receiving a confirmation message for confirming networking with the fourth air conditioning unit sent by the third air conditioning unit may comprise: sending a networking request for requesting networking to the third air conditioning unit, wherein the networking request carries information of the fourth air conditioning unit; receiving a response message sent by the third air conditioning unit, wherein the response message is used as a confirmation message for the third air conditioning unit to confirm the networking with the fourth air conditioning unit according to the information of the fourth air conditioning unit. Realizing the networking through the process of verification by both parties effectively improves the networking accuracy.

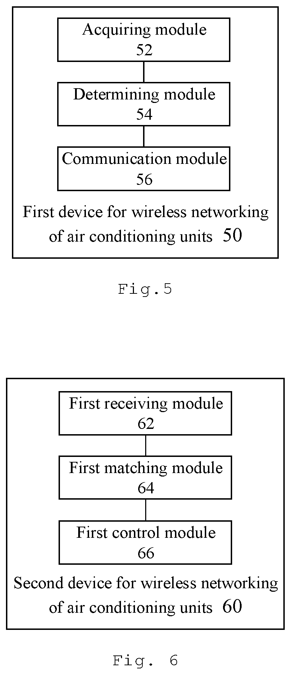

According to the embodiments of the present invention, there is further provided another embodiment of a device for wireless networking of air conditioning units. Fig. 5 is a schematic diagram of the structure of a first device for wireless networking of air conditioning units according to an embodiment of the present invention. As shown in Fig. 5, the first device 50 for wireless networking of air conditioning units comprises an acquiring module 52, a determining module 54 and a communication module 56.

The acquiring module 52 is configured to acquire information of air conditioning units.

The determining module 54 is connected to the acquiring module 52, and is configured to determine the air conditioning units that need to be networked according to the acquired information, wherein the air conditioning units that need to be networked comprise a first air conditioning unit and a second air conditioning unit.

The communication module 56 is connected to the determining module 54, and is configured to send the information of the second air conditioning unit to the first air conditioning unit, and send the information of the first air conditioning unit to the second air conditioning unit, wherein the information of the second air conditioning unit is used for the first air conditioning unit to be networked with the second air conditioning unit, and the information of the first air conditioning unit is used for the second air conditioning unit to be networked with the first air conditioning unit.

According to the embodiments of the present invention, there is further provided an embodiment of another device for wireless networking of air conditioning units. Fig. 6 is a schematic diagram of the structure of a second device for wireless networking of air conditioning units according to an embodiment of the present invention. As shown in Fig. 6, the second device 60 for wireless networking of air conditioning units comprises a first receiving module 62, a first matching module 64 and a first control module 66.

The first receiving module 62 is configured to receive a networking request for requesting networking which is sent by a first air conditioning unit, wherein the networking request carries information of the first air conditioning unit.

The first matching module 64 is connected to the first receiving module 62, and is configured to match the received information of the air conditioning unit with information of the air conditioning unit pre-stored by a second air conditioning unit.

The first control module 66 is connected to the first matching module 64, and is configured to control the first air conditioning unit to be networked with the second air conditioning unit in the case where the matching is successful.

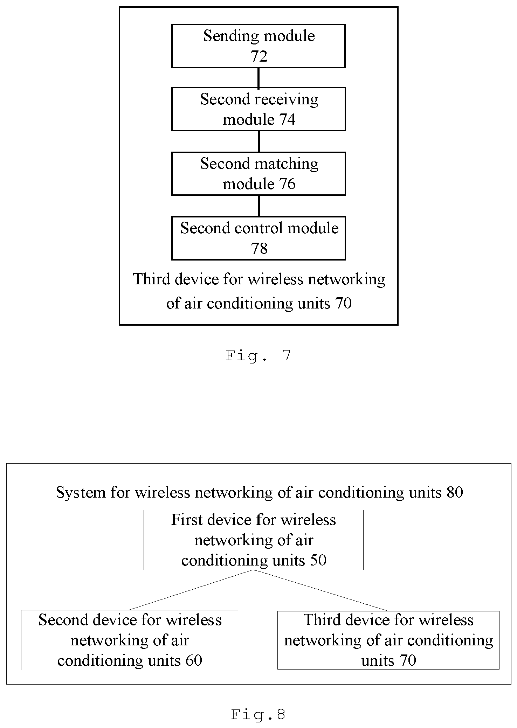

According to the embodiments of the present invention, there is further provided an embodiment of another device for wireless networking of air conditioning units. Fig. 7 is a schematic diagram of the structure of a third device for wireless networking of air conditioning units according to an embodiment of the present invention. As shown in Fig. 7, the third device 70 for wireless networking of air conditioning units comprises a sending module 72, a second receiving module 74, a second matching module 76 and a second control module 78.

The sending module 72 is configured to send a networking request for requesting networking to a third air conditioning unit.

The second receiving module 74 is configured to receive a confirmation message for confirming networking with the fourth air conditioning unit sent by the third air conditioning unit, wherein the confirmation message carries information of the third air conditioning unit.

The second matching module 76 is connected to the second receiving module 74, and is configured to match the received information of the third air conditioning unit with information of the third air conditioning unit pre-stored by the fourth air conditioning unit.

The second control module 78 is connected to the second matching module 76, and is configured to control the fourth air conditioning unit to be networked with the third air conditioning unit in the case where the information matches.

According to the embodiments of the present invention, there is further provided another embodiment of a system for wireless networking of air conditioning units. Fig. 8 is a schematic diagram of the structure of a system for wireless networking of air conditioning units according to an embodiment of the present invention. As shown in Fig. 8, the system 80 for wireless networking of air conditioning units comprises: a first device 50 for wireless networking of air conditioning units, a second device 60 for wireless networking of air conditioning units and a third device 70 for wireless networking of air conditioning units, wherein the first device 50 for wireless networking of air conditioning units, the second device 60 for wireless networking of air conditioning units and the third device 70 for wireless networking of air conditioning units are connected with each other and are in communication with each other in a wired or wireless manner.

It should be noted that, the networking of the first air conditioning unit and the second air conditioning unit, and the networking of the third air conditioning unit and the fourth air conditioning unit may be networking of various types of air conditioning units, for example, the networking may be networking of internal and external units of a multi-split air conditioner. A preferred embodiment of the present invention is described below with the networking of internal and external units of a multi-split air conditioner as an example.

When internal and external units of a multi-split air conditioner adopt a wireless communication mode, at the engineering installation and debugging site, during the engineering debugging of the multi-split air conditioner, the distance between the units is far, there are many wireless signals, and other wireless devices exist at the engineering site, and there is no human-machine operation interface similar to a touch screen or other interactive equipment in the internal and external units of the multi-split air conditioner. resulting in a shortage of networking matching methods, various steps, thus making effective identification impossible. Therefore, the wireless networking of the internal and external units of the air conditioner is extremely inconvenient, the networking efficiency is low, and it is prone to error, which brings great difficulties to the engineering debugging and after-sales maintenance of the multi-split air conditioner. Thus, in a preferred embodiment of the present invention, a method for wireless networking of the internal and external units of a multi-split air conditioner is provided.

In the present preferred embodiment, a networking device is provided. By utilizing the bar codes of the internal and external units of the multi-split air conditioner, the bar codes of the internal and external units which need to be networked at an engineering site are acquired by a code scanner, and the information of the internal and external units contained in the bar codes is analyzed to select the internal and external units which need to be networked, and the bar code information of the internal units is sent to the external unit which needs to be networked therewith. The external unit stores the bar code information of the internal units which need to be networked with the external unit (for example, it may be a list of internal units that need to be networked with external unit), and the external unit filters out wireless data irrelevant to the stored information of the internal units; meanwhile, the bar code information of the external unit is sent to the internal units which need to be networked therewith, and the internal units will filter out wireless data irrelevant to the stored information of the external unit. When the networking is subjected to engineering debugging, after the external unit receives a networking request of an internal unit at the engineering site, only the internal units, of which the information have been pre-stored, can be networked with the external unit; meanwhile, the internal units will also verify whether the external unit to be networked therewith is consistent with the one stored therein, thus ensuring the accuracy of the networking information of the internal and external units, improving the networking efficiency and ensuring the networking correctness. By performing the networking of internal and external units of an air conditioner in the above-mentioned way, the problems of difficulty in networking and difficulty in maintenance, due to the long distance between the internal and external units, many wireless devices and lack of a human-machine interactive interface on the internal and external units at the site, in the installation and debugging phase and the subsequent maintenance phase of a wireless multi-split air conditioner, are solved. By means of the networking device, it is possible to realize quick networking of internal and external units of a multi-split air conditioner and ensure the correctness of the networking of internal and external units.

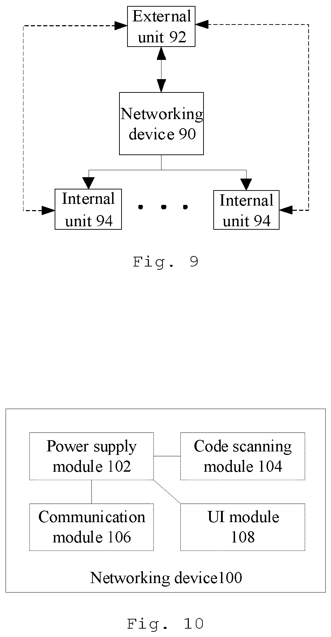

Fig. 9 is a schematic diagram of the structure of a networking system according to a preferred embodiment of the present invention. As shown in Fig. 9, the above-mentioned networking device 90 is in wired connection and communication with internal and external units, respectively. Wired connection transmission is reliable, and it is subjected to little interference of external signals, which can ensure effective communication between the networking device and the internal and external units. The internal and external units are in wireless connection. Wireless connection is not limited by space, it can be performed anytime and anywhere, its application range is wide, and the connection speed is high. It should be noted that, the communication between the networking device and the internal and external units may also be reliable wireless communication, and the communication between the external unit 92 and the internal units 94 may also be wired communication, which can be flexibly selected, with no specific communication method being defined.

Fig. 10 is a schematic diagram of the structure of a networking device according to a preferred embodiment of the present invention. As shown in Fig. 10, the networking device 100 comprises: a power supply module 102 configured to provide a power source for the operation of the device, comprising operation of a controller, liquid crystal backlight, etc.; a code scanning module 104 configured to acquire bar codes of the internal and external units, wherein the bar codes are unique, and model information can be acquired through the bar codes; a communication module 106 configured to realize the communication between the networking device and the internal and external units; a User Interface (simply referred to as UI) module 108 mainly configured to provide an interactive interface for an operator, comprising a capacitive touch screen, a color liquid crystal display, a buzzer, etc., and configured to dynamically display information of the internal and external units obtained by code scanning, data of communication between the internal and external units, networking state, etc.

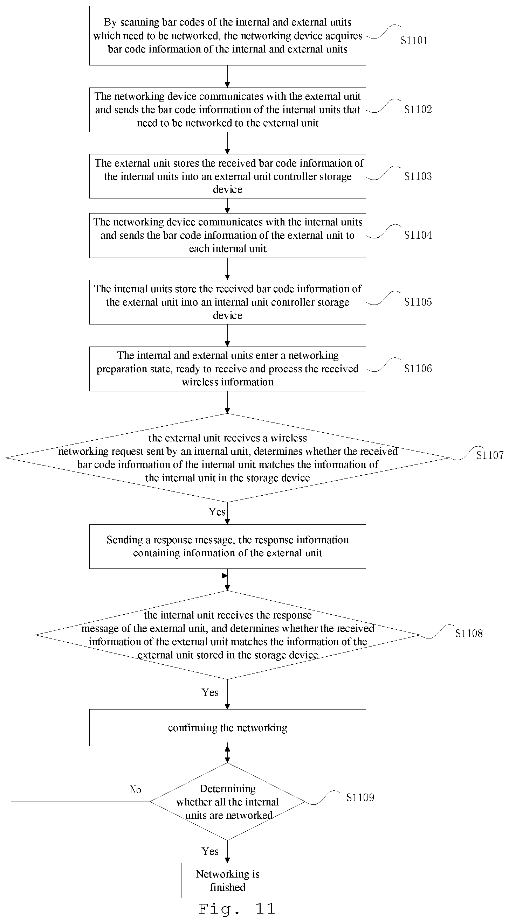

Fig. 11 is a flowchart of a networking method according to a preferred embodiment of the present invention. As shown in Fig. 11, the method for networking of internal and external units comprises the following steps:

Step S1101, by scanning bar codes of the internal and external units which need to be networked, the networking device acquires bar code information of the internal and external units.

Step S1102, the networking device communicates with the external unit and sends the bar code information of the internal units that need to be networked to the external unit.

Step S1103, the external unit stores the received bar code information of the internal units into an external unit controller storage device.

Step S1104, the networking device communicates with the internal units and sends the bar code information of the external unit to each internal unit.

Step S1105, the internal units store the received bar code information of the external unit into an internal unit controller storage device.

Step S1106, the internal and external units enter a networking preparation state, ready to receive and process the received wireless information.

Step S1107, the external unit receives a wireless networking request sent by an internal unit, determines whether the received bar code information of the internal unit matches the information of the internal unit in the storage device, and if so, makes a response, the response information containing the information of the external unit.

Step S1108, the internal unit receives the response message of the external unit, and determines whether the received information of the external unit matches the information of the external unit stored in the storage device, and if so, confirms the networking.

Step S1109, the step S1108 is repeated in sequence until the networking of all the internal and external units that need to be networked is completed.

With the help of the networking device, the program debugging personnel can conveniently and quickly perform the networking operation on the internal and external units that need to be networked when performing wireless networking in the engineering debugging phase, ensuring that only the internal and external units that meet the requirement are networked and avoiding the networking interference of other adjacent, irrelevant equipment and loss of internal unit networking.

The networking device can complete wireless networking with high efficiency and high reliability in the engineering debugging phase and after-sales maintenance phase of a wireless multi-split air conditioner. It accelerates the engineering debugging progress, and improves the after-sales maintenance efficiency and user satisfaction degree.

It should be noted that, while the networking device scans codes to obtain the bar code information of the internal and external units, a white list may be established respectively for the internal and external units. The white list contains bar code information that can be networked with the internal unit or the external unit, which greatly reduces the number of comparison in networking, effectively improves the networking efficiency, increases the networking accuracy and makes the networking more reliable.

The serial numbers of the above-mentioned embodiments of the present invention are only for the purpose of description, and do not represent the quality of the embodiments.

The invention is defined in the claims.

## Claims

1. A method for wireless networking of air conditioning units, comprising:
acquiring, by a device for wireless networking, information of air conditioning units(S102);
determining, by the device, the air conditioning units that need to be networked according to the acquired information (S104), wherein the air conditioning units that need to be networked comprise a first air conditioning unit and a second air conditioning unit; and
sending, by the device, the information of the second air conditioning unit to the first air conditioning unit, and sending the information of the first air conditioning unit to the second air conditioning unit (S106), wherein the information of the second air conditioning unit is used for the first air conditioning unit to be networked with the second air conditioning unit, and the information of the first air conditioning unit is used for the second air conditioning unit to be networked with the first air conditioning unit;
sending, by the first air conditioning unit, a networking request to the second air conditioning unit, wherein the networking request carries information of the first air conditioning unit;
receiving, by the second air conditioning unit, the networking request;
matching, by the second air conditioning unit, the received information of the first air conditioning unit with the pre-stored information of the first air conditioning unit;
sending, by the second air conditioning unit, a networking response to the first air conditioning unit in the case where the matching is successful, wherein the networking response carries the information of the second air conditioning unit;
receiving, by the first air conditioning unit, the networking response;
verifying, by the first air conditioning unit, the received information of the second air conditioning unit with the pre-stored information of the second air conditioning unit;
confirming, by the first air conditioning unit, the networking with the second air conditioning unit in the case where the verification is successful.

2. The method according to claim 1, wherein acquiring the information of the air conditioning units(S102) comprises:
acquiring the information of the air conditioning units by means of scanning two-dimensional codes and/or bar codes of the air conditioning units.

3. The method according to claim 1, wherein determining the air conditioning units that need to be networked according to the acquired information(S104) comprises:
acquiring a matching rule for matching the air conditioning units that need to be networked(S202); and
determining the air conditioning units that need to be networked according to the acquired information and the matching rule(S204).

4. A system for wireless networking of air conditioning units, comprising:
a device for wireless networking, configured to acquire information of air conditioning units; determine the air conditioning units that need to be networked according to the acquired information, wherein the air conditioning units that need to be networked comprise a first air conditioning unit and a second air conditioning unit; and send the information of the second air conditioning unit to the first air conditioning unit, and send the information of the first air conditioning unit to the second air conditioning unit, wherein the information of the second air conditioning unit is used for the first air conditioning unit to be networked with the second air conditioning unit, and the information of the first air conditioning unit is used for the second air conditioning unit to be networked with the first air conditioning unit;
the first air conditioning unit, configured to send a networking request to the second air conditioning unit, wherein the networking request carries information of the first air conditioning unit; receive a networking response from the second air conditioning unit, wherein the networking response carries the information of the second air conditioning unit; verify the received information of the second air conditioning unit with the pre-stored information of the second air conditioning unit; and confirm the networking with the second air conditioning unit in the case where the verification is successful; and
the second air conditioning unit, configured to receive the networking request; match the received information of the first air conditioning unit with the pre-stored information of the first air conditioning unit; and send the networking response to the first air conditioning unit in the case where the matching is successful.

5. The system according to claim 4, wherein:
the device for wireless networking is configured to acquire the information of the air conditioning units by means of scanning two-dimensional codes and/or bar codes of the air conditioning units.

6. The system according to claim 4, wherein:
the device for wireless networking is configured to acquire a matching rule for matching the air conditioning units that need to be networked; and determine the air conditioning units that need to be networked according to the acquired information and the matching rule.

## Patentansprüche

1. Verfahren zur drahtlosen Vernetzung von Klimaanlageneinheiten, umfassend:
Erfassen von Informationen von Klimaanlageneinheiten durch eine Vorrichtung zur drahtlosen Vernetzung (S102);
Bestimmen der Klimaanlageneinheiten, die nach den erfassten Informationen vernetzt werden müssen (S104), durch die Vorrichtung, wobei die Klimaanlageneinheiten, die vernetzt werden müssen, eine erste Klimaanlageneinheit und eine zweite Klimaanlageneinheit umfassen; und
Senden der Informationen der zweiten Klimaanlageneinheit durch die Vorrichtung an die erste Klimaanlageneinheit und Senden der Informationen der ersten Klimaanlageneinheit an die zweite Klimaanlageneinheit (S106), wobei die Informationen der zweiten Klimaanlageneinheit dafür verwendet werden, dass die erste Klimaanlageneinheit mit der zweiten Klimaanlageneinheit vernetzt wird, und die Informationen der ersten Klimaanlageneinheit dafür verwendet werden, dass die zweite Klimaanlageneinheit mit der ersten Klimaanlageneinheit vernetzt wird;
Senden einer Vernetzungsanfrage an die zweite Klimaanlageneinheit durch die erste Klimaanlageneinheit, wobei die Vernetzungsanfrage Informationen der ersten Klimaanlageneinheit enthält;
Empfangen der Vernetzungsanfrage durch die zweite Klimaanlageneinheit;
Abgleichen der empfangenen Informationen der ersten Klimaanlageneinheit mit den vorab gespeicherten Informationen der ersten Klimaanlageneinheit durch die zweite Klimaanlageneinheit;
Senden einer Vernetzungsantwort an die erste Klimaanlageneinheit durch die zweite Klimaanlageneinheit in dem Fall, dass das Abgleichen erfolgreich ist, wobei die Vernetzungsantwort die Informationen der zweiten Klimaanlageneinheit enthält;
Empfangen der Vernetzungsantwort durch die erste Klimaanlageneinheit;
Verifizieren der empfangenen Informationen der zweiten Klimaanlageneinheit mit den vorab gespeicherten Informationen der zweiten Klimaanlageneinheit durch die erste Klimaanlageneinheit;
Bestätigen der Vernetzung mit der zweiten Klimaanlageneinheit durch die erste Klimaanlageneinheit in dem Fall, dass die Verifizierung erfolgreich ist.

2. Verfahren nach Anspruch 1, wobei das Erfassen der Informationen der Klimaanlageneinheiten (S102) umfasst:
Erfassen der Informationen der Klimaanlageneinheiten durch Scannen von zweidimensionalen Codes und/oder Barcodes der Klimaanlageneinheiten.

3. Verfahren nach Anspruch 1, wobei das Bestimmen der Klimaanlageneinheiten, die nach den erfassten Informationen vernetzt werden müssen (S104), umfasst:
Erfassen einer Abgleichungsregel zum Abgleichen der Klimaanlageneinheiten, die vernetzt werden müssen (S202); und
Bestimmen der Klimaanlageneinheiten, die nach den erfassten Informationen und der Abgleichungsregel vernetzt werden müssen (S204).

4. System zur drahtlosen Vernetzung von Klimaanlageneinheiten, umfassend:
eine Vorrichtung zur drahtlosen Vernetzung, konfiguriert zum Erfassen von Informationen von Klimaanlageneinheiten; zum Bestimmen der Klimaanlageneinheiten, die nach den erfassten Informationen vernetzt werden müssen, wobei die Klimaanlageneinheiten, die vernetzt werden müssen, eine erste Klimaanlageneinheit und eine zweite Klimaanlageneinheit umfassen; und zum Senden der Informationen der zweiten Klimaanlageneinheit an die erste Klimaanlageneinheit und zum Senden der Informationen der ersten Klimaanlageneinheit an die zweite Klimaanlageneinheit, wobei die Informationen der zweiten Klimaanlageneinheit dafür verwendet werden, dass die erste Klimaanlageneinheit mit der zweiten Klimaanlageneinheit vernetzt wird, und die Informationen der ersten Klimaanlageneinheit dafür verwendet werden, dass die zweite Klimaanlageneinheit mit der ersten Klimaanlageneinheit vernetzt wird;
die erste Klimaanlageneinheit, konfiguriert zum Senden einer Vernetzungsanfrage an die zweite Klimaanlageneinheit, wobei die Vernetzungsanfrage Informationen der ersten Klimaanlageneinheit enthält; zum Empfangen einer Vernetzungsantwort von der zweiten Klimaanlageneinheit, wobei die Vernetzungsantwort die Informationen der zweiten Klimaanlageneinheit enthält; zum Verifizieren der empfangenen Informationen der zweiten Klimaanlageneinheit mit den vorab gespeicherten Informationen der zweiten Klimaanlageneinheit; und zum Bestätigen der Vernetzung mit der zweiten Klimaanlageneinheit in dem Fall, dass die Verifizierung erfolgreich ist; und
die zweite Klimaanlageneinheit, konfiguriert zum Empfangen der Vernetzungsanfrage; zum Abgleichen der empfangenen Informationen der ersten Klimaanlageneinheit mit den vorab gespeicherten Informationen der ersten Klimaanlageneinheit; und zum Senden der Vernetzungsantwort an die erste Klimaanlageneinheit in dem Fall, dass das Abgleichen erfolgreich ist.

5. System nach Anspruch 4, wobei:
die Vorrichtung zur drahtlosen Vernetzung konfiguriert ist, die Informationen der Klimaanlageneinheiten durch Scannen von zweidimensionalen Codes und/oder Barcodes der Klimaanlageneinheiten zu erfassen.

6. System nach Anspruch 4, wobei:
die Vorrichtung zur drahtlosen Vernetzung konfiguriert ist, eine Abgleichungsregel zum Abgleichen der Klimaanlageneinheiten, die vernetzt werden müssen, zu erfassen; und die Klimaanlageneinheiten, die nach den erfassten Informationen und der Abgleichungsregel vernetzt werden müssen, zu bestimmen.

## Revendications

1. Procédé de mise en réseau sans fil de conditionneurs d'air, comprenant :
le fait d'acquérir, par un dispositif de mise en réseau sans fil, des informations de conditionneurs d'air (S102) ;
le fait de déterminer, par le dispositif, selon les informations acquises (S104), les conditionneurs d'air qui doivent être mis en réseau, dans lequel lesdits conditionneurs d'air qui doivent être mis en réseau comprennent un premier conditionneur d'air et un deuxième conditionneur d'air ; et
le fait d'envoyer, par le dispositif, les informations du deuxième conditionneur d'air au premier conditionneur d'air, et d'envoyer les informations du premier conditionneur d'air au deuxième conditionneur d'air (S106), dans lequel les informations du deuxième conditionneur d'air sont utilisées pour que le premier conditionneur d'air soit mis en réseau avec le deuxième conditionneur d'air, et les informations du premier conditionneur d'air sont utilisées pour que le deuxième conditionneur d'air soit mis en réseau avec le premier conditionneur d'air ;
le fait d'envoyer, par le premier conditionneur d'air, une demande de mise en réseau au deuxième conditionneur d'air, dans lequel ladite demande de mise en réseau porte des informations du premier conditionneur d'air ;
le fait de recevoir, par le deuxième conditionneur d'air, la demande de mise en réseau ;
le fait de mettre en correspondance, par le deuxième conditionneur d'air, des informations reçues du premier conditionneur d'air avec les informations préstockées du premier conditionneur d'air ;
le fait d'envoyer, par le deuxième conditionneur d'air, une réponse de mise en réseau au premier conditionneur d'air dans le cas où la mise en correspondance est réussie, dans lequel ladite réponse de mise en réseau porte les informations du deuxième conditionneur d'air ;
le fait de recevoir, par le premier conditionneur d'air, la réponse de mise en réseau ;
le fait de vérifier, par le premier conditionneur d'air, les informations reçues du deuxième conditionneur d'air avec les informations préstockées du deuxième conditionneur d'air ;
le fait de confirmer, par le premier conditionneur d'air, la mise en réseau avec le deuxième conditionneur d'air dans le cas où la vérification est réussie.

2. Procédé selon la revendication 1, dans lequel l'acquisition des informations des conditionneurs d'air (S102) comprend :
le fait d'acquérir les informations des conditionneurs d'air au moyen du scannage de codes bidimensionnels et/ou de codes-barres des conditionneurs d'air.

3. Procédé selon la revendication 1, dans lequel la détermination des conditionneurs d'air qui doivent être mis en réseau selon les informations acquises (S104) comprend :
le fait d'acquérir une règle de mise en correspondance pour la mise en correspondance des conditionneurs d'air qui doivent être mis en réseau (S202) ; et
le fait de déterminer les conditionneurs d'air qui doivent être mis en réseau selon les informations acquises et la règle de mise en correspondance (S204).

4. Système de mise en réseau sans fil de conditionneurs d'air, comprenant :
un dispositif de mise en réseau sans fil, configuré pour acquérir des informations de conditionneurs d'air ; déterminer les conditionneurs d'air qui doivent être mis en réseau selon les informations acquises, dans lequel lesdits conditionneurs d'air qui doivent être mis en réseau comprennent un premier conditionneur d'air et un deuxième conditionneur d'air ; et envoyer les informations du deuxième conditionneur d'air au premier conditionneur d'air, et envoyer les informations du premier conditionneur d'air au deuxième conditionneur d'air, dans lequel les informations du deuxième conditionneur d'air sont utilisées pour que le premier conditionneur d'air soit mis en réseau avec le deuxième conditionneur d'air, et les informations du premier conditionneur d'air sont utilisées pour que le deuxième conditionneur d'air soit mis en réseau avec le premier conditionneur d'air ;
le premier conditionneur d'air étant configuré de manière à envoyer une demande de mise en réseau au deuxième conditionneur d'air, dans lequel la demande de mise en réseau porte des informations du premier conditionneur d'air ; recevoir, en provenance du deuxième conditionneur d'air, une réponse de mise en réseau, dans lequel la réponse de mise en réseau porte les informations du deuxième conditionneur d'air ; vérifier les informations reçues du deuxième conditionneur d'air avec les informations préstockées du deuxième conditionneur d'air ; et confirmer la mise en réseau avec le deuxième conditionneur d'air dans le cas où la vérification est réussie ; et
le deuxième conditionneur d'air étant configuré de manière à recevoir la demande de mise en réseau ; mettre en correspondance les informations reçues du premier conditionneur d'air avec les informations préstockées du premier conditionneur d'air ; et envoyer la réponse de mise en réseau au premier conditionneur d'air dans le cas où la mise en correspondance est réussie.

5. Système selon la revendication 4, dans lequel :
le dispositif de mise en réseau sans fil est configuré pour acquérir les informations des conditionneurs d'air au moyen du scannage de codes bidimensionnels et/ou de codes-barres des conditionneurs d'air.

6. Système selon la revendication 4, dans lequel :
le dispositif de mise en réseau sans fil est configuré pour acquérir une règle de mise en correspondance pour la mise en correspondance des conditionneurs d'air qui doivent être mis en réseau ; et déterminer les conditionneurs d'air qui doivent être mis en réseau selon les informations acquises et la règle de mise en correspondance.
